# FASCICULE DE BREVET EUROPEEN

(11) **EP 0 618 089 B1**
(45) Date de publication et mention de la délivrance du brevet: **23.10.1996**
(21) Numéro de dépôt: 94400415.9
(22) Date de dépôt: 28.02.1994
(51) Int. Cl.: B60B 33/02

(54) **Roulette pivotante à blocage directionnel**
Lenkrolle mit Richtungsverriegelung
Castor wheel with locking of steering

(30) Priorité: 30.03.1993 FR 9303650
(43) Date de publication de la demande: 05.10.1994
(73) Titulaire: GUITEL-ETIENNE MOBILOR, F-93310 Le Pré Saint-Gervais (FR)
(72) Inventeur: Bertrand, Claude, F-93600 Aulnay Sous Bois (FR); Hrabina, Jean, F-93600 Aulnay Sous Bois (FR)
(74) Mandataire: Hasenrader, Hubert

(56) Documents cités:
- EP-A- 0 352 380
- EP-A- 0 370 716
- FR-A- 2 488 190
- GB-A- 2 090 126
- US-A- 4 494 272

## Description

La présente invention concerne une roulette pivotante comportant une roue pivotable autour d'un axe de pivotement vertical sensiblement orthogonal à l'axe de rotation de la roue et décalé par rapport à ce dernier, un palier de support présentant au moins une cuvette annulaire qui par sa partie centrale est fixée sur l'extrémité inférieure dudit axe de pivotement, une chape de support présentant au moins une joue latérale dont l'extrémité inférieure porte ladite roue et présentant également une jupe disposée autour de ladite extrémité inférieure de l'axe de pivotement, ladite jupe étant raccordée à l'extrémité supérieure de ladite joue et coopérant avec les organes de roulement dudit palier, et des moyens de blocage du pivotement de ladite roue par rapport audit axe de pivotement dans au moins une position prédéterminée, lesdits moyens de blocage comprenant une lame de ressort qui est disposée dans l'espace compris entre le palier de support et la bande de roulement de la roue.

Une telle roulette est connue notamment par le document FR-A-2 488 190 qui prévoit une lame à ressort recourbée et fixée par une extrémité sur une première partie de la roulette et dont l'autre extrémité forme un tenon de blocage destiné à s'engager dans une dépression prévue sur une deuxième partie de roulette pivotable par rapport à la première partie. En cas de desserrage de la fixation de la lame à ressort, les moyens de blocage ne remplissent plus leur fonction de blocage du pivotement.

Il est également connu par EP 0 370 716, US 4,494,272 et la demande de brevet japonais 54-63958 publiée sous le numéro 55 156 702, des roulettes comportant des moyens de blocage susceptibles de bloquer le pivotement de la chape par rotation de la roue dans un sens et de libérer le pivotement de la chape par rotation de la roue dans l'autre sens. Ces moyens nécessitent une rotation inverse de la roue pour débloquer le dispositif et ils comportent des éléments mobiles actionnés par la rotation de la roue et soumis à l'encrassement ou des palpeurs soumis à usure par frottement contre la roue.

Le but de la présente invention est de pallier ces inconvénients.

Le but est atteint selon l'invention par le fait que la lame à ressort est articulée par sa partie médiane sur la chape, ladite lame à ressort comportant une première extrémité appuyée sur la jupe et une deuxième extrémité comportant un verrou de blocage susceptible de s'engager dans une dépression prévue sur la cuvette annulaire.

De manière à permettre une précision dans la direction de la roulette en position bloquée, la jupe comporte des moyens de guidage du verrou de blocage. Ces moyens de guidage comportent avantageusement une encoche ménagée dans la jupe.

Cette disposition permet d'éviter une déformation de la lame de ressort par torsion lorsqu'on exerce un couple de rotation sur la chape ou l'axe de pivotement par suite du déport de la roue par rapport à l'axe de pivotement.

Selon un premier mode de réalisation, la lame à ressort est montée sur la chape au moyen d'un axe d'articulation disposée parallèlement à l'axe de rotation de la roue.

Selon une variante de réalisation, l'axe d'articulation est montée pivotable sur la chape et elle comporte au moins une came sur laquelle la lame à ressort est articulée, de manière à permettre la mise hors fonction des moyens de blocage.

Selon un deuxième mode de réalisation, la lame à ressort comporte des pattes latérales présentant des crevés coopérant avec des ouvertures ménagées dans la chape.

Avantageusement, le verrou de blocage est appuyé par la lame de ressort sur le bord libre de la cuvette annulaire et il est prévu au moins une dépression de blocage dans ledit bord libre.

Dé préférence, la dépression présente des rampes inclinées afin de permettre le déblocage du pivotement de la roue par un couple de rotation exercé sur la chape ou sur l'axe de pivotement. Le verrou peut être de forme sphérique, cylindrique ou anguleuse, la valeur des angles agissant sur la souplesse de fonctionnement du mécanisme. La dépression a une forme en correspondance avec celle du verrou. Il peut être réalisé en différents matériaux par exemple en matière plastique, en composite, en métal, en céramique ou autres matériaux. Le choix du matériau permet d'obtenir le frottement minimum du verrou sur le bord libre de la cuvette annulaire et de minimiser les phénomènes d'usure. Il peut être fixé sur la lame à ressort par encliquetage, surmoulage, revêtage ou tout autre moyen d'assemblage ou de liaison.

Dans une autre variante de réalisation, la lame à ressort comporte à sa deuxième extrémité une pédale susceptible d'être manoeuvrée par l'utilisateur pour le déblocage du pivotement de la roue.

Selon une forme particulièrement avantageuse, le verrou fait partie intégrante de la lame à ressort et est formé dans la paroi de cette dernière.

De préférence, la roulette comporte de plus des moyens pour régler la force exercée par le ressort. Ces moyens comportent avantageusement une vis de réglage coopérant avec la jupe de la chape de support.

D'autres caractéristiques et avantages de l'invention ressortiront à la lecture de la description suivante fait à titre d'exemple et en référence aux dessins annexés dans lesquels :
la figure 1 est une vue en élévation et en coupe verticale partielle d'une roulette munie de moyens de blocage conformes à l'invention selon un premier mode de réalisation,
la figure 2 est une vue arrière de la roulette de la figure 1,
la figure 3 montre une variante de réalisation du mode de réalisation de la figure 1,
les figures 4A à 4E montrent différentes formes de réalisation du verrou de blocage,
la figure 5 représente un deuxième mode de réalisation particulièrement avantageux des moyens de blocage du pivotement de la roulette,
les figures 5A à 5C montrent des variantes de réalisation des moyens de fixation de la lame à ressort sur le flasque,
la figure 6 est une autre variante de réalisation du mode de réalisation de la figure 1,
la figure 7 montre une autre variante de réalisation de la roulette de la figure 1,
la figure 8 est une vue arrière de la roulette de la figure 7.

La roulette 1 représentée sur les dessins comporte une roue 2 qui est susceptible de pouvoir pivoter autour d'un axe vertical de pivotement 3 sensiblement orthogonal à l'axe de rotation horizontal 4 de la roue 2. Les extrémités de l'axe de rotation 4 sont portées par au moins une joue latérale, et de préférence deux joues latérales 5, d'une chape 6 dont la partie supérieure se présente sous la forme d'une jupe 7 montée par l'intermédiaire d'un palier de support 8 sur l'extrémité inférieure de l'axe vertical de pivotement 3.

Dans le présent descriptif, par axe de pivotement il faut entendre toute tige ou platine destinée à fixer la roulette 1 sur un chariot ou autre plate-forme mobile non représenté sur le dessin.

Comme on peut le voir sur les dessins, le palier de support 8 comprend une première cuvette annulaire 9 et une deuxième cuvette annulaire 10 fixée comme la première, rigidement sur l'extrémité inférieure de l'axe de pivotement 3. Les deux cuvettes 9 et 10 sont ouvertes vers le bas. La première cuvette 9 est disposée au-dessus de la deuxième cuvette 10 et présente une jupe extérieure en forme de cloche 9a, à laquelle se raccorde à la partie supérieure, un fond annulaire retourné vers le bas 9b qui, dans la zone d'ouverture intérieure repose sur le fond annulaire 10a de la cuvette inférieure 10. Les deux cuvettes 9, 10 sont fixées sur l'axe de pivotement 3 et sont enserrées par leurs bords intérieurs entre deux épaulements annulaires 3a, 3b de l'axe vertical 3. A son extrémité inférieure, cette cuvette inférieure 10 possède un rebord annulaire 10b qui, par sa face supérieure, sert de piste de roulement à une première série de billes de roulement ou organes analogues 11 sur laquelle prend appui la jupe 7 de la chape de support 6. Dans la zone de jonction annulaire entre la cloche 9a et le fond annulaire 9b, la cuvette supérieure 9 délimite une piste de roulement en forme de gorge 12 dans laquelle est logée une deuxième série de billes de roulement 13 reposant sur la face supérieure de la jupe 7. La cuvette extérieure 9 entoure et recouvre la jupe 7 et la cuvette inférieure 10.

La roulette pivotante 1 comporte également des moyens de blocage 16 de la chape 6 au moins dans une direction prédéterminée par rapport à l'axe de pivotement 3.

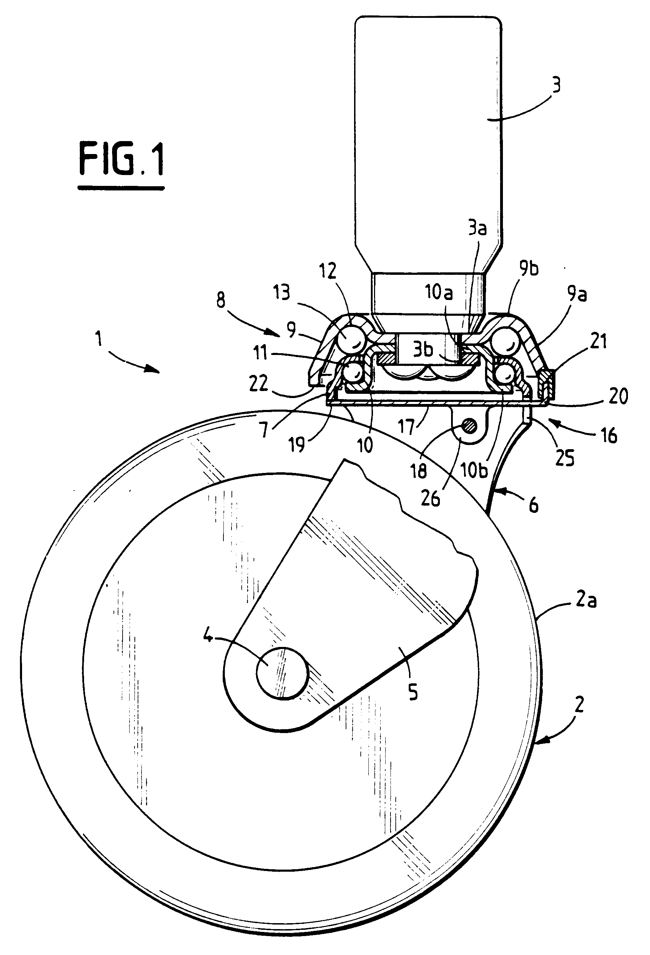

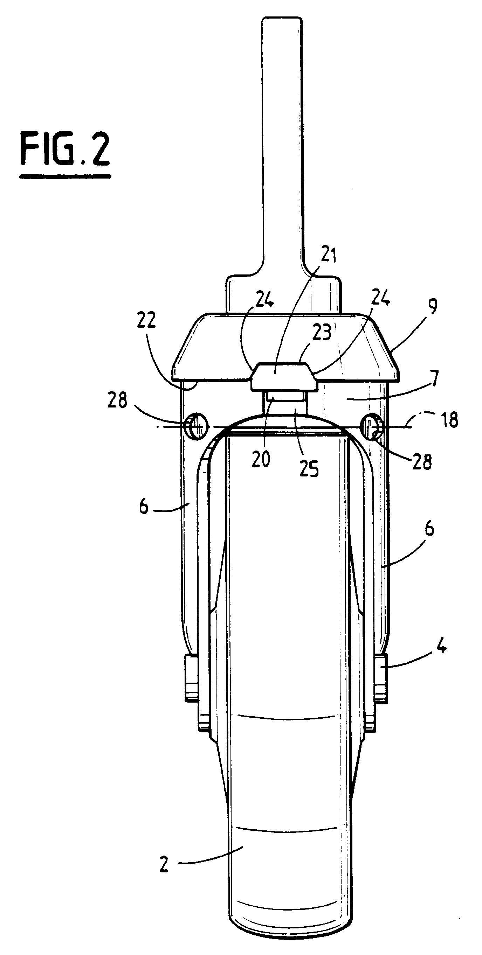

Selon le mode de réalisation représenté sur les figures 1 et 2, les moyens de blocage 16 comportent une lame à ressort 17 de forme généralement plane et disposée dans l'espace compris entre le palier de support 8 et la bande de roulement 2a de la roue 2. La lame à ressort 17 est articulée par sa partie médiane sur la chape 6 par l'intermédiaire d'un axe d'articulation 18 sensiblement parallèle à l'axe de rotation 4 de la roue 2. Une première extrémité 19 de la lame à ressort 17 est en appui sur le bord inférieur de la jupe 7 tandis que son autre extrémité 20 comporte un verrou de blocage 21 qui est maintenu en appui sur le bord inférieur libre 22 de la cuvette supérieure 9. Ce bord 22 comporte au moins une dépression 23 adaptée à la forme du verrou de blocage 21 et réalisée sous la forme d'une encoche présentant des rampes 24 latérales inclinées, afin de permettre le déblocage du pivotement de la roue 2 en exerçant un couple de rotation sur la chape 6 ou l'axe de pivotement 3.

La jupe 7 comporte au voisinage du verrou de blocage 21, une encoche 25 de forme rectangulaire destinée à guider l'extrémité 20 de la lame à ressort 17. Cette encoche 25 est ouverte sur le bord inférieur de la jupe 7. La lame à ressort 17 comporte sur ses bords longitudinaux des pattes 26 dans lesquelles sont prévues des ouvertures pour le passage de l'axe d'articulation 18. Sur la figure 2, l'axe d'articulation 18 n'est pas représenté par mesure de clarté.

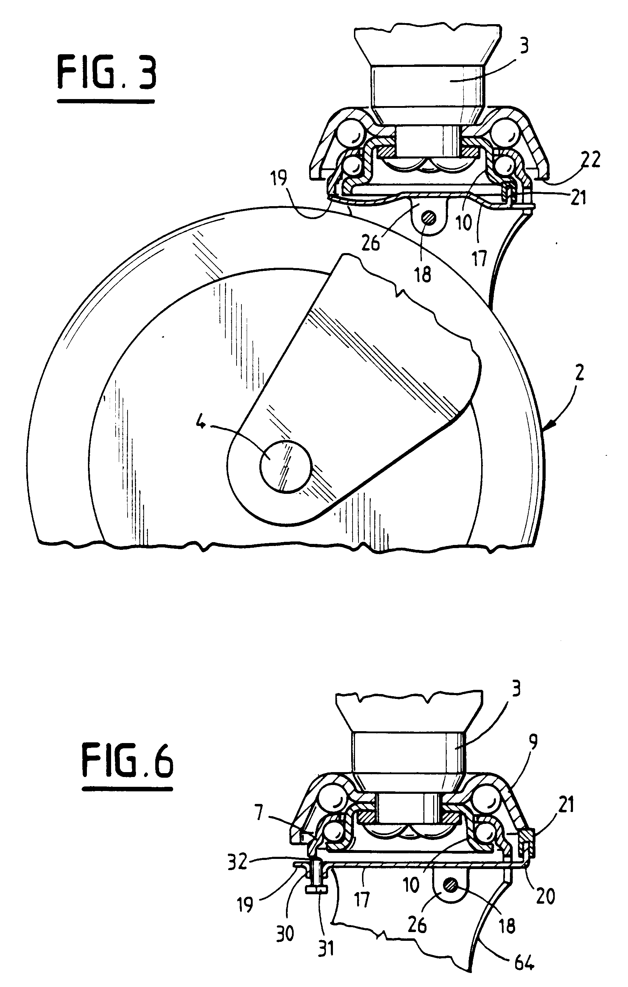

Le mode de réalisation représenté sur la figure 3 est semblable au mode de réalisation représenté sur les figures 1 et 2 si ce n'est que le verrou de blocage 21 coopère avec une dépression 23 ménagée dans la cuvette inférieure 10.

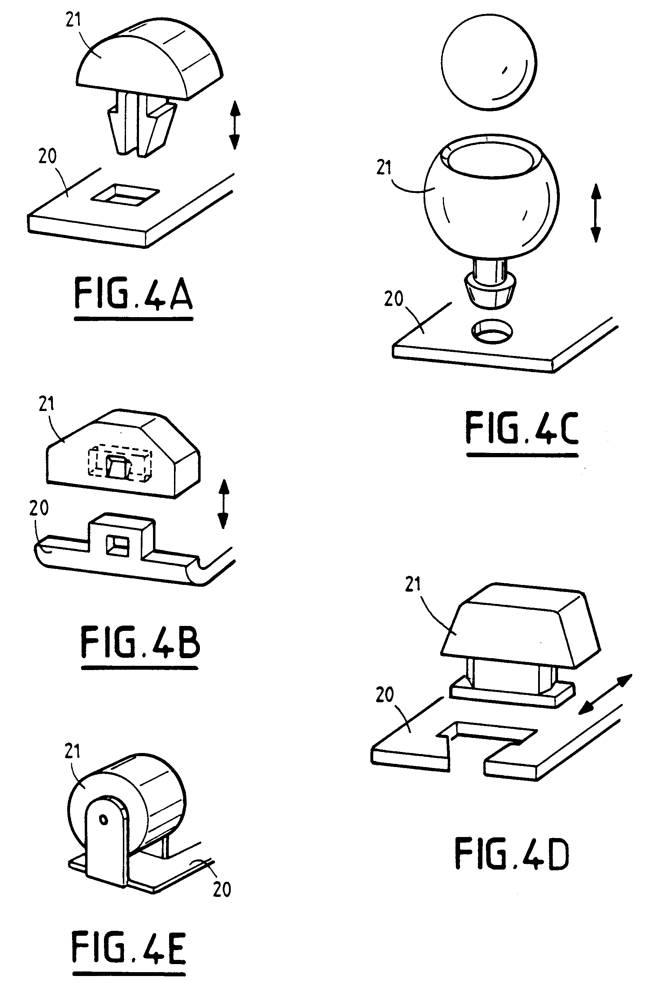

Les figures 4A à 4D représentent plusieurs modes de réalisation du verrou de blocage 21. Le verrou peut être réalisé en différents matériaux. Le choix du matériau permet d'obtenir un frottement minimum du verrou 21 sur la cuvette 9 ou 10 en utilisation et de minimiser les phénomènes d'usure. Les matériaux préférés sont la matière plastique, les composites, ou la céramique, voire le métal. Le verrou 21 peut être de forme sphérique, cylindrique ou anguleuse. La valeur des angles agit sur la souplesse de fonctionnement du verrou. Il peut être fixé sur la lame de ressort par encliquetage, surmoulage, revêtage ou tout autre moyen d'assemblage ou de liaison. La figure 4E montre un verrou de blocage 21 sous forme d'un rouleau pouvant rouler sur le bord inférieur 22 d'une cuvette 9 ou 10 du palier 8.

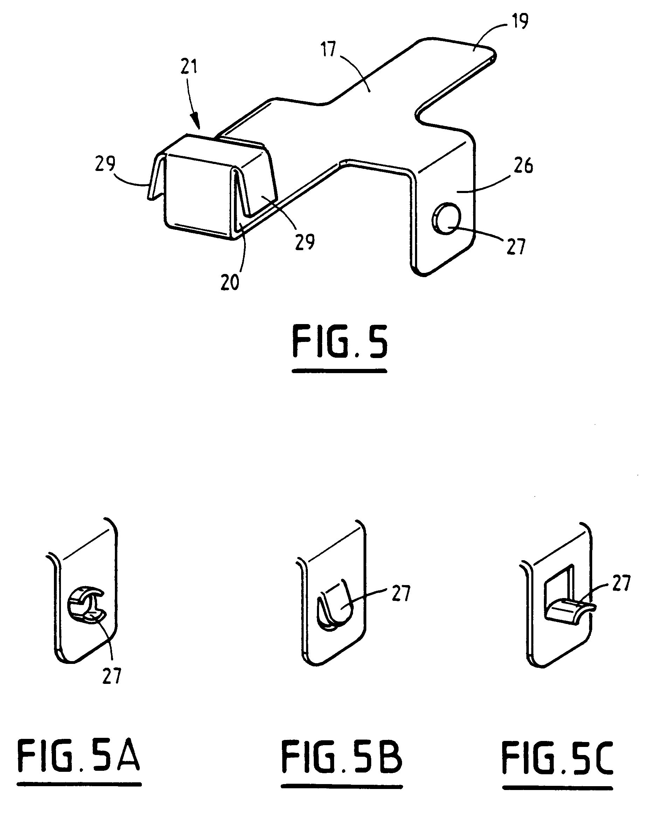

La figure 5 montre un mode de réalisation particulièrement avantageux des moyens de blocage 16 qui sont réalisés en une seule pièce par découpe et pliage d'une lame à ressort 17. Les pattes 26 comportent des crevés 27 susceptibles de coopérer avec les parois des ouvertures 28 ménagées dans la chape 6. Le verrou de blocage 21 est formé par des pattes inclinées 29 dont l'angle d'inclinaison est sensiblement égal à la pente des rampes 24 de la dépression 23.

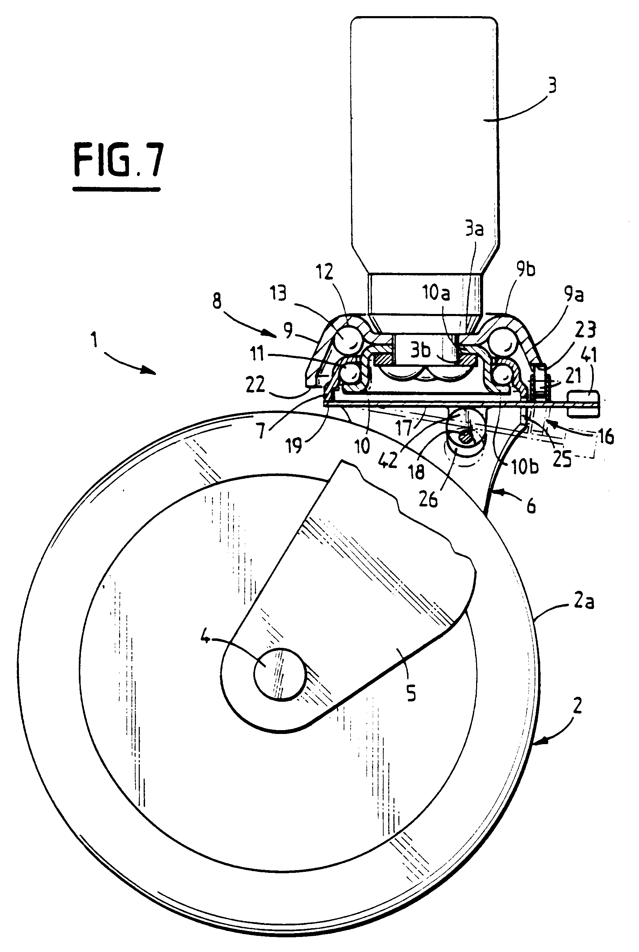

La figure 6 montre des moyens de blocage 16 semblables à ceux de la figure 1 dans lesquels la première extrémité 19 de la lame à ressort 17 présente un taraudage 30 recevant une vis de réglage 31, dont la tige 32 est en appui sur le bord inférieur de la jupe 7. Cette vis 31 permet de régler la pression exercée par le verrou de blocage 21 dans la dépression 23 ou contre le bord libre 22 de la cuvette 9 ou 10.

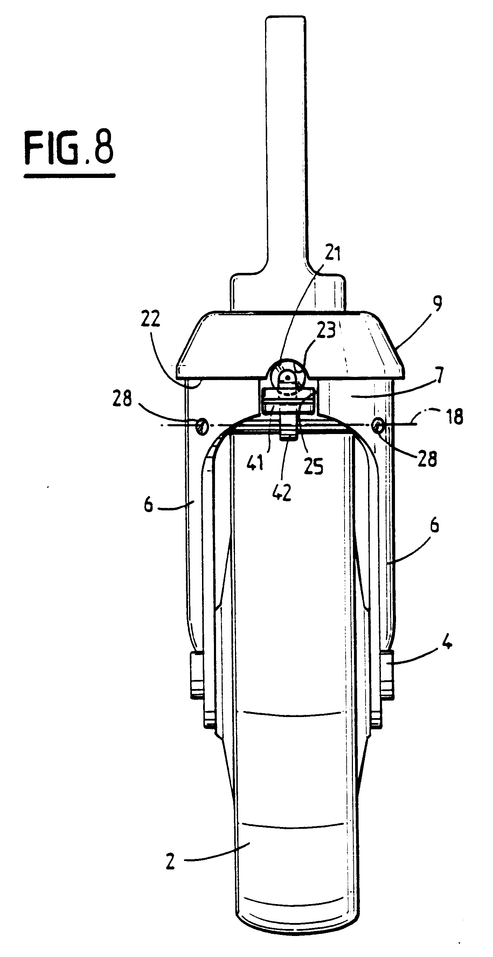

Les figures 7 et 8 montrent des variantes de réalisation de la roulette représentée sur la figure 1. Le verrou de blocage 21 est constitué par un rouleau conforme à celui représenté sur la figure 4E. La dépression 23 a une forme semi-circulaire, qui ne permet pas le déblocage automatique du verrou 21. C'est pourquoi la lame à ressort 17 comporte à son extrémité 20 un levier ou pédale de déblocage 41 qui est susceptible d'être manoeuvré par l'utilisateur.

L'axe d'articulation 18 comporte en outre une came 42 sur laquelle est articulée la lame à ressort 17. L'axe d'articulation 18 est monté pivotable sur la chape 6 de telle manière que la lame à ressort 17 puisse prendre deux positions extrêmes: une première position montrée en traits pleins sur la figure 7 dans laquelle les moyens de blocage sont opérants, la lame à ressort 17 étant en appui par ses deux extrémités 19, 20 respectivement sur la jupe 7 et la cuvette 9, et une deuxième position, représentée en traits pointillés sur la figure 7, dans laquelle les moyens de blocage sont inopérants, le rouleau 21 étant alors éloigné de la cuvette 9.

## Revendications

1. Roulette pivotante comportant une roue (2) pivotable autour d'un axe de pivotement (3) vertical sensiblement orthogonal à l'axe de rotation (4) de la roue (2) et décalé par rapport à ce dernier, un palier de support (8) présentant au moins une cuvette annulaire (9, 10) qui par sa partie centrale est fixée sur l'extrémité inférieure dudit axe de pivotement (3), une chape de support (6) présentant au moins une joue latérale (5) dont l'extrémité inférieure porte ladite roue (2) et présentant également une jupe (7) disposée autour de ladite extrémité inférieure de l'axe de pivotement (3), ladite jupe (7) étant raccordée à l'extrémité supérieure de ladite joue (5) et coopérant avec les organes de roulement (11, 13) dudit palier ( 8), et des moyens de blocage (16) du pivotement de ladite roue (2) par rapport audit axe de pivotement (3) dans au moins une position prédéterminée, lesdits moyens de blocage (16) comprenant une lame de ressort (17),
qui est disposée dans l'espace compris entre le palier de support (8) et la bande de roulement (2a) de la roue (2), caractérisée en ce que la lame à ressort (17) est articulée par sa partie médiane sur la chape (6), ladite lame à ressort (17) comportant une première extrémité (19) appuyée sur la jupe (7) et une deuxième extrémité (20) comportant un verrou de blocage (21) susceptible de s'engager dans une dépression (23) prévue sur la cuvette annulaire (9, 10).

2. Roulette selon la revendication 1, caractérisée en ce que la jupe (7) comporte des moyens de guidage (25) du verrou de blocage (21).

3. Roulette selon la revendication 2, caractérisée en ce que lesdits moyens de guidage (25) comportent une encoche ménagée dans la jupe (7).

4. Roulette selon l'une des revendications 1 à 3, caractérisée en ce que la lame à ressort (17) est montée sur la chape (6)) au moyen d'un axe d'articulation (18) disposée parallèlement à l'axe de rotation de la roue (2).

5. Roulette selon l'un des revendications 1 à 3, caractérisée en ce que la lame à ressort (17) comporte des pattes (26) latérales présentant des crevés (27) coopérant avec des ouvertures ménagées dans la chape (7).

6. Roulette selon l'une quelconque des revendications 1 à 5, caractérisée en ce que le verrou de blocage (21) est appuyé par la lame de ressort (17) sur le bord libre (22) de la cuvette (9, 10) annulaire, et en ce qu'il est prévu au moins une dépression de blocage (23) dans ledit bord libre (22).

7. Roulette selon la revendication 6, caractérisée en ce que ladite dépression (23) présente des rampes (24) inclinées afin de permettre le déblocage du pivotement de la roue (2) par un couple de rotation exercé sur la chape (6) ou l'axe de pivotement (3).

8. Roulette selon l'une des revendications 1 à 7, caractérisée en ce que le verrou de blocage (21) est formé dans la paroi de la lame à ressort (17).

9. Roulette selon l'une des revendications 1 à 8, caractérisée en ce qu'elle comporte en outre des moyens pour régler la force exercée par le ressort (17).

10. Roulette selon la revendication 9, caractérisée en ce que les moyens pour régler la force du ressort comportent une vis de réglage coopérant avec la jupe.

11. Roulette selon la revendication 4 , caractérisée en ce que l'axe d'articulation (18) est pivotable et comporte au moins une came (42) sur laquelle la lame à ressort (17) est articulée.

12. Roulette selon l'une quelconque des revendications 1 à 11, caractérisée en ce que la lame à ressort (17) comporte à sa deuxième extrémité (20) une pédale (41) permettant le déblocage manuel du pivotement de la roue (2).

## Claims

1. Swivel castor comprising a wheel (2) adapted to pivot about a vertical pivot pin (3) substantially orthogonal to the axle (4) of the wheel (2) and offset with respect thereto, a support bearing (8) presenting at least one annular dish element (9, 10) which, via its central part, is fixed on the lower end of said pivot pin (3), a supporting fork joint (6) presenting at least one lateral cheek (5) whose lower end bears said wheel (2) and also presenting a skirt (7) disposed around said lower end of the pivot pin (3), said skirt (7) being joined to the upper end of said cheek (5) and cooperating with the rolling members (11, 13) of said bearing (8), and means (16) for blocking the pivoting of said wheel (2) with respect to said pivot pin (3) in at least one predetermined position, said blocking means (16) comprising a spring blade (17), which is disposed in the space included between the support bearing (8) and the tread (2a) of the wheel (2), characterized in that the spring blade (17) is articulated by its median part on the fork joint (6), said spring blade (17) comprising a first end (19) bearing on the skirt (7) and a second end (20) comprising a blocking lock (21) capable of engaging in a depression (23) provided on the annular dish element (9, 10).

2. Castor according to claim 1, characterized in that the skirt (7) comprises means (25) for guiding the blocking lock (21).

3. Castor according to claim 2, characterized in that said guide means (25) comprise a notch made in the skirt (7).

4. Castor according to one of claims 1 to 3, characterized in that the spring blade (17) is mounted on the fork joint (6) by means of a hinge pin (18) disposed parallel to the axle of the wheel (2).

5. Castor according to one of claims 1 to 3, characterized in that the spring blade (17) comprises lateral tabs (26) presenting embossed portions (27) cooperating with openings made in the fork joint (6).

6. Castor according to any one of claims 1 to 5, characterized in that the blocking lock (21) bears via the spring blade (17) on the free edge (22) of the annular dish element (9, 10) and in that at least one depression (23) for blocking is provided in said free edge (22).

7. Castor according to claim 6, characterized in that said depression (23) presents inclined ramps (24) in order to allow unblocking of the pivoting of the wheel (2) by a torque exerted on the fork joint (6) or on the pivot pin (3).

8. Castor according to one of claims 1 to 7, characterized in that the blocking lock (21) is formed in the wall of the spring blade (17).

9. Castor according to one of claims 1 to 8, characterized in that it further comprises means for adjusting the force exerted by the spring (17).

10. Castor according to claim 9, characterized in that the means for adjusting the force of the spring comprise an adjusting screw cooperating with the skirt.

11. Castor according to claim 4, characterized in that the hinge pin (18) is pivotable and comprises at least one cam (42) on which the spring blade (17) is articulated.

12. Castor according to any one of claims 1 to 11, characterized in that the spring blade (17) comprises at its second end (20) a pedal (41) allowing manual unblocking of the pivoting of the wheel (2).

## Patentansprüche

1. Lenkrolle, umfassend ein Rad (2), das um einen vertikalen Schwenkbolzen (3) verschwenkbar ist, der im wesentlichen senkrecht zu der Drehachse (4) des Rades (2) verläuft und gegenüber jener versetzt ist, ein Stützlager (8), das mindestens eine ringförmige Schale (9, 10) aufweist, die mit ihrem Mittelteil am unteren Ende des genannten Schwenkbolzens (3) befestigt ist, eine Traggabel (6), die mindestens einen Seitenarm (5) aufweist, dessen unteres Ende das genannte Rad (2) trägt, und die außerdem einen um das genannte untere Ende des Schwenkbolzens (3) führenden Mantel (7) besitzt, der mit dem oberen Ende des genannten Arms (5) verbunden ist und mit den Wälziagern (11, 13) des genannten Stützlagers (8) zusammenwirkt, sowie eine Einrichtung (16) zum Verriegeln der Schwenkbewegung des genannten Rades (2) gegenüber dem genannten Schwenkbolzen (3) in mindestens einer vorbestimmten Position, welche Verriegelungseinrichtung (16) ein Federblatt (17) aufweist, das in dem Zwischenraum zwischen dem Stützlager (8) und der Lauffläche (2a) des Rades (2) angeordnet ist,
dadurch gekennzeichnet, daß das Federblatt (17) mit seinem Mittelabschnitt an der Traggabel (6) angelenkt ist, und daß das Federblatt (17) ein erstes Ende (19) aufweist, das an dem Mantel (7) abgestützt ist, und ein zweites Ende (20), das mit einer Sperrklinke (21) versehen ist, die in eine an der ringförmigen Schale (9, 10) vorgesehene Vertiefung (23) einzugreifen vermag.

2. Rolle nach Anspruch 1, dadurch gekennzeichnet, daß der Mantel (7) Führungsmittel (25) für die Sperrklinke (21) aufweist.

3. Rolle nach Anspruch 2, dadurch gekennzeichnet, daß die genannten Führungsmittel (25) eine in dem Mantel (7) vorgesehene Ausklinkung umfassen.

4. Rolle nach einem der Ansprüche 1 bis 3, dadurch gekennzeichnet, daß das Federblatt (17) an der Traggabel (6) mittels einer Drehachse (18) angebracht ist, die parallel zu der Drehachse des Rades (2) verläuft.

5. Rolle nach einem der Ansprüche 1 bis 3, dadurch gekennzeichnet, daß das Federblatt (17) Seitenlappen (26) mit Buckeln (27) aufweist, die mit in dem Mantel (7) vorgesehenen Öffnungen zusammenwirken.

6. Rolle nach einem der Ansprüche 1 bis 5, dadurch gekennzeichnet, daß die Sperrklinke (21) durch das Federblatt (17) an der freien Kante (22) der ringförmigen Schale (9, 10) abgestützt wird, und daß in der genannten freien Kante (22) mindestens eine als Verriegelung dienende Vertiefung (23) vorgesehen ist.

7. Rolle nach Anspruch 6, dadurch gekennzeichnet, daß die genannte Vertiefung (23) Schrägflächen (24) aufweist, damit die Freigabe der Schwenkbewegung des Rades (2) durch ein Drehmoment erfolgen kann, das an der Traggabel (6) oder dem Schwenkbolzen (3) angreift.

8. Rolle nach einem der Ansprüche 1 bis 7, dadurch gekennzeichnet, daß die Sperrklinke (21) einstückig aus der Wand des Federblatts (17) gebildet ist.

9. Rolle nach einem der Ansprüche 1 bis 8, dadurch gekennzeichnet, daß sie außerdem eine Einrichtung zum Einstellen der durch die Feder (17) auszuübenden Kraft aufweist.

10. Rolle nach Anspruch 9, dadurch gekennzeichnet, daß die Einrichtung zum Einstellen der Kraftwirkung der Feder eine mit dem Mantel zusammenwirkende Stelischraube aufweist.

11. Rolle nach Anspruch 4, dadurch gekennzeichnet, daß die Drehachse (18) schwenkbar ist und mindestens einen Nocken (42) aufweist, mit dem das Federblatt (17) beweglich verbunden ist.

12. Rolle nach einem der Ansprüche 1 bis 11, dadurch gekennzeichnet, daß das Federblatt (17) an seinem zweiten Ende (20) mit einem Pedal (41) versehen ist, mit dem die Richtungsverriegelung des Rades (20) manuell aufgehoben werden kann.
